# EUROPÄISCHE PATENTSCHRIFT

(11) **EP 0 563 769 B1**
(45) Veröffentlichungstag und Bekanntmachung des Hinweises auf die Patenterteilung: **12.12.2001**
(21) Anmeldenummer: 93104833.4
(22) Anmeldetag: 24.03.1993
(51) Int. Cl.: G01K 11/06

(54) **Temperatur-Indikator für tiefgefrorene Produkte**
Temperature indicator for deep-frozen products
Indicateur de la temperature pour produits surgelés

(30) Priorität: 01.04.1992 DE 4210739
(43) Veröffentlichungstag der Anmeldung: 06.10.1993
(73) Patentinhaber: EMTEC Magnetics GmbH, 67059 Ludwigshafen (DE)
(72) Erfinder: Veitch, Ronald John, Dr., W-6701 Maxdorf (DE); Jakusch, Helmut, Dr., W-6710 Frankenthal (DE); Heilmann, Peter, Dr., W-6702 Bad Duerkheim (DE)

(56) Entgegenhaltungen:
- EP-A- 0 250 217
- FR-A- 2 640 750
- US-A- 3 675 501
- US-A- 4 850 716

## Beschreibung

Die Erfindung betrifft eine Vorrichtung zur irreversiblen Anzeige zeitweiliger Überschreitung der zulässigen Lagertemperatur an in gefrorenem Zustand gelagerten Produkten, bestehend aus einem Behälter mit transparenten Wänden, der in wärmeleitender Verbindung mit dem gelagerten Produkt steht und in seinem Innenraum ein Medium mit einem Schmelzpunkt im Bereich von ungefähr 0°C bis -50°C sowie feinteilige weich- oder hartmagnetische Pigmente enthält.

Bei der Tiefkühllagerung von Nahrungsmitteln muß, wenn eine längere Haltbarkeit gewährleistet sein soll, eine Lagertemperatur von mindestens - 16 °C eingehalten werden. Wird dagegen eine Temperatur von - 10 °C bis - 15 °C überschritten, so ist die Haltbarkeit vieler Lebensmittel nicht mehr gewährleistet; das Tiefkühlgut gilt als angetaut, obwohl es äußerlich noch gefroren erscheint.

Normalerweise sind Tiefkühlgeräte mit eingebauten Thermometern ausgerüstet, welche die Temperatur an einer bestimmten Stelle des Kühlraumes anzeigen, oder es wird ein gebräuchliches Thermometer auf oder neben das Kühlgut gelegt und zum Ablesen aus dem Kühlgerät herausgenommen. In diesen Fällen besteht keine Gewähr, daß die Temperatur des Kühlgutes genau gemessen wird. Außerdem kann durch Stapelung und Packung des Kühlgutes die Konvektion der Luft im Kühlraum behindert werden, so daß selbst bei einwandfreier Funktion des Gerätes an einigen Stellen des Kühlraumes die für die Haltbarkeit der Nahrungsmittel erforderlichen Mindesttemperaturen überschritten werden können. Für den Benutzer des Tiefkühlgutes ist das Überschreiten der Haltbarkeitstemperatur nicht zu erkennen, so daß er den Verderb der Nahrungsmittel nicht durch rechtzeitige Entnahme und alsbaldigen Verbrauch begegnen kann. Die Gefahr, daß tiefgefrorene Nahrungsmittel unbemerkt angetaut werden, ist beispielsweise besonders groß, wenn eine größere Menge Kühlgut warm in das Tiefkühlgerät eingebracht wird.

Daher ist es wünschenswert, einen Temperatur-Indikator zur Verfügung zu haben, der für jede Nahrungsmittelverpackung oder eine Gruppe von Packungen anzeigt, ob sie während ihrer gesamten Lagerzeit hinreichend gekühlt waren.

Temperaturanzeige-Vorrichtungen der eingangs genannten gattungsmäßigen Art sind beispielsweise aus den DE 25 47 638 sowie 32 43 031 bekannt. In der erstgenannten Offenlegungsschrift ist das Anzeigeelement eine Kontaktschicht aus saugfähigem Material, über der eine Schicht aus in einer freiwerdenden Flüssigkeit löslicher Farbe angeordnet ist, über der sich eine Anzeigeschicht, wiederum aus saugfähigem Material, befindet. Bei teilweisem Auftauen des Gefriergutes wird an dessen Oberfläche Zellflüssigkeit frei, die von der Kontaktschicht aufgesaugt wird. Die so aufgenommene Flüssigkeit löst Teile der Farbschicht auf und die angefärbte Flüssigkeit wird dann von der Anzeigeschicht aufgesaugt, deren Verfärbung einen Hinweis auf Qualitätsminderung durch Unterbrechung der Kühlkette gibt.

Die letztgenannte Schrift beschreibt einen Behälter mit transparenten Wänden, beispielsweise einen flachen Beutel, welcher ein eutektisches Gemisch enthält und wobei diejenige Wandung des Behälters, die dem Kühlgut zugewandt ist, auf ihrer Innenseite eine erkennbare Beschriftung enthält. Bei Unterschreitung der kritischen Temperatur ist die Beschriftung unsichtbar und wird erst bei Überschreitung der kritischen Temperatur sichtbar. Weiterhin ist in dieser Schrift beschrieben, daß zwischen Kühlgut und dem beschriebenen Behälter ein saugfähiges Material angebracht werden kann, welches die bei Überschreitung der kritischen Temperatur aufgenommene Flüssigkeit aufsaugt und auf diese Weise ein Detektor für die Überschreitung der zulässigen Temperatur ist.

Die beiden vorgenannten Temperatur-Indikatoren haben einen komplizierten Aufbau; außerdem ist es nicht sichergestellt, daß das Kühlprodukt nicht mit dem Indikatormittel in Kontakt kommt und dadurch geschädigt wird.

Die US 3 675 501 beschreibt eine Art Fieberthermometer, bestehend aus einer Serie von mehreren voneinander getrennten versiegelten Behältern, von denen jeder ein Medium mit einem Umschlagspunkt fest/flüssig im gewünschten Bereich zeigt und wobei die Umschlagspunkte der in den verschiedenen Behältern eingebrachten Medien um den gewünschten Betrag differieren. Außerdem enthält jeder Behälter in den Medien suspendierte magnetische Metallpartikel. Über die Gesamtheit der Behälter wird eine Magnetfolie gelegt, welche die Metallpartikel parallel ausrichtet und die so lange aufgebracht bleibt, bis der Behälter zur Anwendung beim Patienten gelangt. Diese Vorrichtung hat den Nachteil, daß sie zwar eine lesbare Anzeige erlaubt, so lange das im Behälter enthaltene Medium im festen Zustand ist, nicht jedoch, wenn sich das Medium im flüssigen Zustand befindet, weil in diesem Fall die Orientierung der Magnetteilchen verloren geht.

Daher bestand die Aufgabe, eine Indikator-Vorrichtung der eingangs genannten gattungsmäßigen Art zu finden, welche nicht die oben genannten Nachteile aufweist und die eine irreversible Anzeige der Überschreitung der zulässigen Temperatur ermöglicht, wobei die Anzeige auf einfache Weise optisch darzustellen oder mit anderen Mitteln zu detektieren ist.

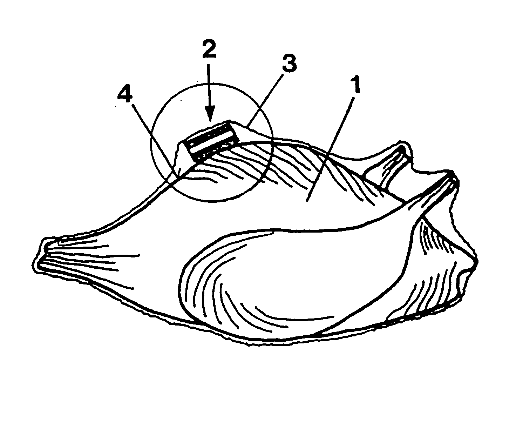

Erfindungsgemäß wurde die Aufgabe gelöst mit einer Vorrichtung mit den im kennzeichnenden Teil des Anspruchs 1 genannten Merkmalen. Weitere erfindungsgemäße Merkmale gehen aus den Unteransprüchen, der Beschreibung und der Zeichnung hervor.

Nachstehend wird die Erfindung näher erläutert, wobei Bezug auf die Figur genommen wird. An einer beliebigen Stelle der Oberfläche (4) des Tiefkühlgutes (1) ist die noch näher zu beschreibende Indikator-Vorrichtung (2) in die Umhüllung (3), beispielsweise eine Schrumpf-Folie des Gefriergutes mit eingelegt. Der Temperatur-Indikator (2) ist bevorzugt ein aus flexiblem transparentem Kunststoff bestehender flacher Beutel, in dessen Inneren sich als Medium eine anorganische eutektische Mischung oder eine organische Verbindung befinden, welche einen Schmelzpunkt im Bereich von 0 °C bis - 50 °C, bevorzugt von - 10 °C bis - 25 °C haben.

Das Wesen der Erfindung besteht nun darin, daß in dem genannten Medium feinteilige hart- oder weichmagnetische Pigmente dispergiert sind. Unter Einwirkung eines äußeren Magnetfeldes können die magnetischen Pigmente in der Dispersion bewegt beziehungsweise an bestimmten Orten gesammelt oder aufkonzentriert werden. Als äußeres Magnetfeld kann beispielsweise ein Magnetstreifen oder Permanentmagnet dienen, der ein Bar-Code-Muster oder alpha-numerische Zeichen oder ein Grafikmuster, etwa ein Firmenemblem magnetisch aufgezeichnet enthält und der sich in engem Kontakt zur magnetischen Dispersion in dem Beutel befindet, beispielsweise auf diesem aufgeklebt ist.

Die Trägerflüssigkeit der magnetischen Dispersion und gegebenenfalls zusätzliche Hilfskomponenten, beispielsweise Dispergier- und Stabilisierungsmittel oder die weiter unten genannten Zusätze wählt man so aus, daß im beschriebenen Temperaturbereich ein Phasenübergang flüssig/fest erfolgt, oder sich zumindest die Beschaffenheit der Dispersion stark verfestigt.

Die vorstehend beschriebene magnetische temperatursensible Dispersion läßt sich einfach und preiswert herstellen. Als Dispersionsflüssigkeit kommen solche Stoffe infrage, die im gewünschten Temperaturbereich von 0 °C bis - 50 °C ihren Aggregatzustand flüssig/fest ändern oder zumindest eine starke Änderung ihrer Viskosität aufweisen. Beispielsweise dafür geeignet sind eutektische Gemische, bekannt aus der vorstehend genannten DE 32 43 031, wie Ammoniumchlorid, Kalziumnitrat, Ammoniumnitrat, Natriumnitrat, Kaliumchlorid oder Mischungen davon zusammen mit Wasser. Ebenfalls geeignet sind organische Verbindungen wie Diethylsuccinat, Oktylcaprylat, Heptylcaprylat, Hexyllaurat und andere.

In diese Flüssigkeit werden feinteilige magnetische Pigmente, welche gemäß dem Stand der Technik durch Fällung oder keramisch gewonnen werden, eindispergiert. Geeignet sind dafür beispielsweise γ-Fe₂O₃, Fe₃O₄, CrO₂, Metallpulver oder Legierungen. Durch den Aufbau und die Zusammensetzung der vorstehend beschriebenen Pigmente kann deren magnetisches Verhalten (weich- oder hartmagnetisch) in beliebiger Weise eingestellt werden. Ihre Auswahl ist so zu treffen, daß auf sie eine genügend hohe magnetische Kraftwirkung zur Wanderung in der Dispersionsflüssigkeit ausgeübt werden kann, daß ihre gegenseitige Anziehung im tiefgekühlten Zustand nicht zu hoch ist, so daß eine Entmischung beim Auftauen durch thermische Anregung gewährleistet ist und daß sie in der Lage sind, bei optischer Detektion einen guten optischen Kontrast zu erzeugen.

Um die vorgenannten Bedingungen zu erzielen, können die magnetischen Pigmente in nieder- oder hochmolekularen Dispergatoren eingearbeitet sein. Solche Dispergatoren sind beispielsweise aus der DE 39 08 425 bekannt. Weiterhin können die magnetischen Pigmente in polymeren Bindemitteln dispergiert werden; Beispiele dafür sind ebenso aus der oben genannten DE 39 08 425 bekannt.

Um den Abstand der beiden Folien des Beutels, der die Dispersionszusammensetzung aufnimmt, klein und konstant zu halten, kann man der Dispersion ein entsprechend großes farbloses Stützpigment oder Latexteilchen zusetzen, die als Abstandshalter das Zusammenlagern der beiden Folienseiten verhindern. Eine andere Lösung besteht darin, daß die Innenseite einer oder beider Folienoberflächen strukturiert sind, beispielsweise durch Noppen, so daß der Innenraum des Beutels in kleinere Bereiche unterteilt wird, um ein Verfließen der Dispersion zu verhindern.

Als Wandmaterial für den Folienbeutel kommt beispielsweise Polyester, Polyethylen oder Polypropylen infrage. Nach Aufnahme der oben genannten Dispersionsflüssigkeit wird der Beutel auslaufsicher, vorzugsweise durch Verschweißen, verschlossen.

Zur magnetischen Beschriftung des beschriebenen Temperatur-Indikators bietet sich eine Magnetfolie an, wie man sie zum Beispiel bei Telefonkarten, Tickets oder Sparbüchern findet und auf die die bereits oben genannten Informationen aufgezeichnet wurden. Die Magnetfolie wird auf den Beutel aufgeklebt und dem Tiefkühlgut in wärmeleitender Verbindung, wie aus der Figur zu ersehen, beigegeben.

Die erfindungsgemäße Vorrichtung kann durch geeignete Kombination noch günstigere Ausgestaltungen beinhalten. So kann die eine Außen- oder Innenseite des Beutels eine reflektierende oder farbige Schicht zur Kontrastverstärkung der Anzeige enthalten.

Weiterhin ist es in einer Variante möglich, bei Überschreitung der kritischen Temperatur ein sichtbares Muster in ein anderes ebenfalls sichtbares Muster zu verwandeln. Dazu wird zusätzlich zu dem auf der Oberseite aufgeklebten Magnetstreifen auf der entgegengesetzten, also der Unterseite, des Beutels ein zweiter Magnetstreifen angebracht, dessen Muster erst nach Tiefkühlung des Beutels aufmagnetisiert wird.

Während der Tiefkühlung der Ware unterhalb der kritischen Temperatur sowie des beschriebenen Temperaturindikators wird das äußere Magnetfeld des auf der Oberseite aufgeklebten Magnetstreifens aufrechterhalten und nach Unterschreiten der kritischen Temperatur abgenommen. Der geordnete Zustand der verfestigten magnetischen Dispersion wird solange aufrecht erhalten, solange die Temperatur nicht über einen gewissen Wert beziehungsweise über ein gewisses Wert-Zeit-Produkt steigt. Wird nun - nach Abziehen des auf der Oberseite aufgeklebten Streifens - die kritische Temperatur überschritten, so wird in der Dispersion ein Muster durch die auf dem zweiten Magnetstreifen eingeprägte magnetische Kennzeichnung sichtbar und kann detektiert werden. Auf diese Weise kann eine eindeutige "yes/no"-Information abgelesen werden in der Art, daß beispielsweise der erste Magnetstreifen die Beschriftung "tiefgekühlt" und der zweite Magnetstreifen die Schrift "aufgetaut" in dem Medium sichtbar macht.

Ebenso ist es aber auch möglich, lediglich diesen zweiten Magnetstreifen in der beschriebenen Weise zur Detektierung zu benutzen. Dann erscheint lediglich bei Überschreiten der kritischen Temperatur ein Muster.

Der magnetische Zustand kann ebenso mit einem auf magnetische Felder ansprechbaren Detektor abgetastet werden, beispielsweise eine magnetisch festgehaltene Bar-Code-Information mit einem magnetisch ansprechenden Bar-Code-Leser. In diesem Fall braucht der die magnetische Dispersion enthaltende Beutel keine transparenten Wände zu haben.

Auf diese Weise sind zahlreiche Kombinationen beziehungsweise Übergänge von einem sichtbaren oder detektierbaren Muster in ein anderes möglich.

## Patentansprüche

1. Vorrichtung zur irreversiblen Anzeige zeitweiliger Überschreitung der zulässigen Lagertemperatur an in gefrorenem Zustand gelagerten Produkten, bestehend aus einem Behälter mit transparenten Wänden, der in wärmeleitender Verbindung mit dem gelagerten Produkt steht und in seinem Innenraum ein Medium mit einem Schmelzpunkt im Bereich von ungefähr 0°C bis - 50°C sowie feinteilige weich- oder hartmagnetische Pigmente enthält, **dadurch gekennzeichnet, daß** der Behälter an einer Wand einen Magnetstreifen mit einem Bar-Code-Muster oder einem alpha-numerischen Zeichen oder einem Grafikmuster besitzt, welches nach Überschreiten des Phasenübergangs flüssig/fest aufgebracht ist und welches nach dem Überschreiten des Phasenübergangs fest/flüssig eine optische und/oder magnetische Information in dem Medium hinterläßt.

2. Vorrichtung nach Anspruch 1, **dadurch gekennzeichnet, daß** der Behälter vor dem Überschreiten des Phasenübergangs flüssig/fest dem Magnetfeld eines weiteren Magnetstreifens mit einem magnetischen Muster ausgesetzt ist, wobei der weitere Magnetstreifen an einer der ersten Wand entgegengesetzten Wand des Behälters angebracht ist und nach dem Überschreiten des Phasenübergangs flüssig / fest entfernt wird.

3. Vorrichtung nach den Ansprüchen 1 oder 2, **dadurch gekennzeichnet, daß** das im Behälter enthaltene Medium Stützpigmente oder Latexteilchen zur Stabilisierung des Abstandes der vorderen und hinteren Wand enthält.

4. Vorrichtung nach den Ansprüchen 1 bis 3, **dadurch gekennzeichnet, daß** eine Außen- und/oder die Innenseite mindestens einer Wand des Behälters zur Gewährleistung eines konstanten Abstandes der beiden Wände strukturiert oder genoppt ist.

5. Vorrichtung nach den Ansprüchen 1 bis 4, **dadurch gekennzeichnet, daß** eine äußere und/oder innere Wandoberfläche des Behälters eine reflektierende oder gefärbte Schicht zur Vergrößerung des visuellen Eindrucks enthält.

## Claims

1. A device for irreversibly indicating that the permissible storage temperature for products stored in the frozen state has been temporarily exceeded, comprising a container with transparent walls which is connected in a thermally conductive manner to the stored product and in its interior contains a medium with a melting point in the range from approximately 0°C to - 50°C, as well as finely particulate soft or hard magnetic pigments, wherein the container on one wall has a magnetic strip with a bar code pattern or an alphanumeric symbol or a graphic pattern which is applied after the liquid/solid phase transition has been passed and which leaves behind visual and/or magnetic information in the medium after the solid/liquid phase transition has been passed.

2. A device as claimed in claim 1, wherein the container is exposed to the magnetic field of a further magnetic strip with a magnetic pattern before the liquid/solid phase transition is passed, the further magnetic strip being arranged on a wall of the container which is opposite the first wall and being removed after the liquid/solid phase transition has been passed.

3. A device as claimed in claim 1 or 2, wherein the medium contained in the container contains supporting pigments or latex particles for stabilizing the distance between the front and rear walls.

4. A device as claimed in any of claims 1 to 3, wherein an outer side and/or the inner side of at least one wall of the container is structured or bumpy in order to ensure a constant distance between the two walls.

5. A device as claimed in any of claims 1 to 4, wherein an outer and/or inner wall surface of the container includes a reflective or dyed coating in order to increase the visual impression.

## Revendications

1. Dispositif pour l'affichage irréversible du dépassement momentané de la température de conservation admissible de produits entreposés à l'état congelé, constitué d'un réceptacle doté de parois transparentes qui est en communication thermiquement conductrice avec le produit entreposé, et qui contient dans son espace intérieur un fluide dont le point de fusion est situé dans la plage d'environ 0°C à -50°C, ainsi que des pigments finement divisés à coercivité magnétique faible ou forte, **caractérisé en ce que** le réceptacle possède sur une paroi une bande magnétique dotée d'un motif en codes à barres, d'un signe alphanumérique ou d'un motif graphique qui sont appliqués après dépassement de la transition de phase liquide/solide et qui laissent dans le fluide une information optique et/ou magnétique après le dépassement de la transition de phase solide/liquide,.

2. Dispositif selon la revendication 1, **caractérisé en ce qu'**avant le dépassement de la transition de phase liquide/solide, le réceptacle est exposé au champ magnétique d'une autre bande magnétique dotée d'un motif magnétique, l'autre bande magnétique étant installée sur une paroi du réceptacle opposée à la première paroi et étant enlevée après le dépassement de la transition de phase liquide/solide.

3. Dispositif selon les revendications 1 ou 2, **caractérisé en ce que** pour stabiliser la distance entre la paroi avant et la paroi arrière, le fluide contenu dans le réceptacle contient des pigments auxiliaires ou des particules de latex.

4. Dispositif selon les revendications 1 à 3, **caractérisé en ce que** pour assurer un écart permanent entre les deux parois, le côté extérieur et/ou le côté intérieur d'au moins une paroi du réceptacle sont structurés ou dotés de reliefs.

5. Dispositif selon les revendications 1 à 4, **caractérisé en ce que** pour renforcer l'effet visuel, une surface extérieure de paroi et/ou une surface intérieure d'une paroi du réceptacle contiennent une couche réfléchissante ou colorée.
